## Europäisches Patentamt

## European Patent Office

## Office européen des brevets

(19)

(11) Veröffentlichungsnummer: **0 282 589**
**A1**

(12) **EUROPÄISCHE PATENTANMELDUNG**

Veröffentlicht nach Art. 158 Abs. 3 EPÜ

(21) Anmeldenummer: **86907014.4**

(22) Anmeldetag: **16.09.86**

Daten der zugrundeliegenden internationalen Anmeldung:

(86) Internationale Anmeldenummer:
**PCT/SU86/00088**

(87) Internationale Veröffentlichungsnummer:
**WO88/02193 (24.03.88 88/07)**

(51) Int. Cl.³: **H 02 K 33/08**

(43) Veröffentlichungstag der Anmeldung:
**21.09.88 Patentblatt 88/38**

(84) Benannte Vertragsstaaten:
**DE FR GB IT**

(71) Anmelder: **GRUZINSKY SELSKOKHOZYAISTVENNY INSTITUT**

**Tbilisi-Digomi, 380031(SU)**

(72) Erfinder: **XOVRELI, Robinzon Ivanovich**
**Lotkinsky ovrag, 17**
**Tbilisi, 380001(SU)**

(72) Erfinder: **DIDEBULIDZE, Alexandr Konstantinovich**
**ul. Mitskevicha, 1-3**
**Tbilisi, 380060(SU)**

(72) Erfinder: **KOCHIEV, Valery Kharitonovich**
**ul. Tselinnikov, 11-39**
**Tskhinvali, 383570(SU)**

(72) Erfinder: **GASSEEV, Amiran Fedorovich**
**ul. Isaka, 58-3-37**
**Tskhinvali, 383570(SU)**

(74) Vertreter: **Ebbinghaus, Dieter et al,**
**v. FÜNER, EBBINGHAUS, FINCKPostfach 95 01 60**
**D-8000 München 95(DE)**

(54) **ELEKTROMAGNETISCHER VIBRATIONSMOTOR.**

(57) Der elektromagnetische Schwingmotor enthält einen vierpoligen unsymmetrischen Ständer mit einer Wechselstromwicklung, die aus zwei parallelgeschalteten Zweigen besteht. Jeder Zweig beinhaltet zwei in Reihe geschaltete Spulen (12, 13 und 14, 15), die auf den benachbarten Ständerpolen (3, 4 und 5, 6) angebracht sind. Die Ständerpole (3 und 4) sind nach entgegengesetzten Seiten und die Pole (5 und 6) aufeinander zu in bezug auf die Symmetrieachsen der ihnen zugeordneten Ankerpole (8, 9 und 10, 11) um einen der halben Ständerpolbreite gleichen Abstand versetzt. Der Schwingmotor enthält auch einen vierpoligen symmetrischen Anker, dessen Pole mit einer Gleichstromwicklung versehen sind. Die Spulen (18, 19) und (20, 21) sind paarweise gleichsinnig in Reihe geschaltet, während diese Paare in bezug aufeinander gegensinnig geschaltet sind.

FIG. 1

EP 0 282 589 A1

0282589

ELEKTROMAGNETISCHER SCHWINGMOTOR

Technisches Gebiet

Die vorliegende Erfindung bezieht sich auf besondere elektrische Maschinen, die zur Versetzung der Arbeitsorgane verschiedener Vorrichtungen in Winkelschwingungen verwendet werden, insbesondere auf elektrische Schwingmotoren.

Zugrundliegender Stand der Technik

Bekannt ist ein elektromagnetischer Schwingmotor (s.SU--Erfinderschein 1 040 573, Cl. H 02 K 33/14, aus dem Jahre 1983), der einen Ständer mit einer auf zwei Paaren von symmetrisch über den Kreisumfang angeordneten Polen angebrachten Wicklung, deren parallele Zweige an eine Speisequelle über gegensinnig geschaltete Gleichrichter angeschlossen sind, und einen unsymmetrischen Anker mit ausgeprägten Polen enthält, dessen Pole in entgegengesetzten Richtungen in bezug auf die Symmetrieachse um ihre halbe Breite paarweise versetzt sind.

Die vorhandenen Gleichrichter verringern energetische Parameter, während die Unsymmetrie des Ankers, insbesondere der geringe Abstand der angenäherten Pole, technologische Schwierigkeiten ergibt, wenn die Vormagnetisierungswicklung auf den Anker aufgewickelt wird, und die Kühlungsverhältnisse verschlechtert. Bei leistungsfähigen Schwingmotoren wird darüber hinaus das dynamische Verhalten beeinträchtigt.

Bekannt ist ein elektromagnetischer Schwingmotor (s. FR-PS 1 552 754, Cl. H 02 K, bekanntgemacht am 10. Januar 1969), der einen vierpoligen symmetrischen Anker und einen vierpoligen unsymmetrischen Ständer enthält, dessen Pole in gleicher Richtung um die halbe Polbreite versetzt sind. Die Wechselstromwicklung des Sänders besteht aus zwei parallelgeschalteten Zweigen, die auf gegenüberliegenden Ständerpolen angeordnet sind. Jeder Zweig enthält zwei in Reihe geschaltete Spulen und ist an eine Speisequelle über eine Halbleiterdiode angeschlossen. In den ungeradzahligen Halbperioden fließt der Wechselstrom der Speisequelle durch den einen parallelen Zweig der Ständerwicklung und in den geradzahligen durch den anderen Zweig. Dadurch werden in den beiden magnetischen Kreisen entsprechende Magnetflüsse erregt und entsteht ein alternierendes Störmoment, welches dem harmonischen Gesetz unter-

- 2 -

liegende Ankerschwingungen bewirkt.

Durch die vorhandenen Einweggleichrichter beim elektromagnetischen Schwingungserreger bekannter Konstruktion werden seine energetischen Parameter verringert sowie die Form der Stromkurve verzerrt und somit die Speisequelle negativ beeinflußt. Eine vollständige Kompensation der Selbstinduktions-EMK mittels Schaltungen mit Vormagnetisierung ist hier unmöglich, weil die parallelen Zweige der Ständerwicklung auf den entgegengesetzten Polen angeordnet sind und die die Zugkraft erzeugenden Magnetflüsse infolgedessen sich kreuzen. Die vergrößerte Länge des magnetischen Kreises beeinträchtigt ebenfalls die energetischen Parameter des Schwingmotors.

Offenbarung der Erfindung

Der vorliegenden Erfindung liegt die Aufgabe zugrunde, einen elektromagnetischen Schwingmotor zu schaffen, bei welchem die konstruktive Ständerausführung und die Aufwicklung der Wicklungsspulen es erlauben würden, den Wirkungsgrad und den Leistungsfaktor zu erhöhen sowie die Amplitude der Ankerschwingungen durch Änderung des Vormagnetisierungsstromes zu regeln.

Die gestellte Aufgabe wird dadurch gelöst, daß beim elektromagnetischen Schwingungsmotor, der einen vierpoligen symmetrischen Anker mit einer Gleichstromwicklung und einen vierpoligen unsymmetrischen Ständer mit einer Wechselstromwicklung enthält, die aus zwei parallelgeschalteten Zweigen besteht, von denen jeder zwei in Reihe geschaltete Spulen beinhaltet, erfindungsgemäß die das eine Paar bildenden benachbarten Ständerpole nach entgegengesetzten Seiten versetzt sind und die das andere Paar bildenden benachbarten Pole aufeinander zu in bezug auf die Symmetrieachsen der ihnen zugeordneten Ankerpole um einen der halben Breite der Ständerpole gleichen Abstand versetzt sind, wobei jeder Zweig der Wechselstromwicklung auf dem ihm zugeordneten Paar der benachbarten Ständerpole angebracht ist, und außerdem die Gleichstromwicklungsspulen des Ankers paarweise gleichsinnig in Reihe geschaltet und auf seinen benachbarten Polen angeordnet sind, während diese Spulenpaare in bezug aufeinander gegensinnig geschaltet sind.

Die vorgeschlagene Erfindung erlaubt es, die Zuverlässigkeit des elektrischen Schwingmotors zu erhöhen und seine Kosten zu verringern.

Kurze Beschreibung der Zeichnungen

Die vorgeschlagene Erfindung wird nachfolgend durch ein konkretes Beispiel ihrer Ausführung und beigelegte Zeichnungen näher erläutert, in denen es zeigen:

Fig. 1 das Schema eines erfindungsgemäßen Schwingmotors;

Fig. 2 den zeitlichen Verlauf der Magnetflüsse im Luftspalt eines erfindungsgemäßen Schwingmotors.

Beste Ausführungsform der Erfindung

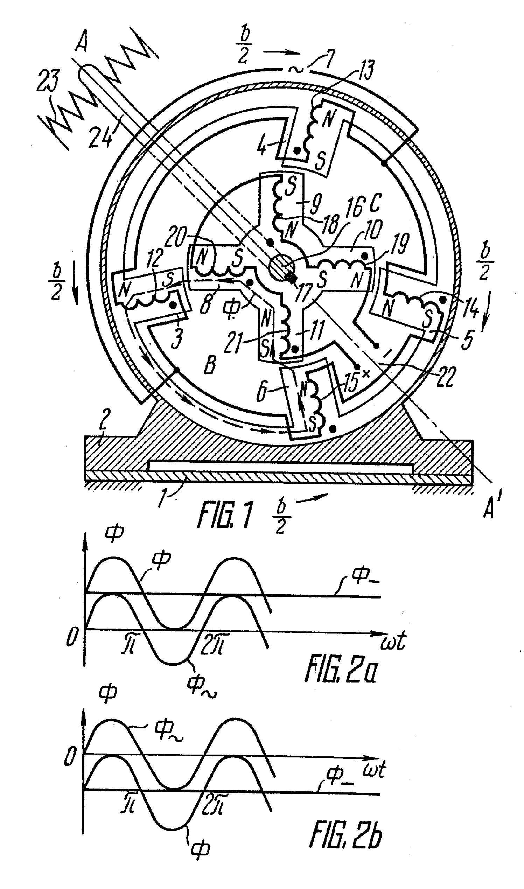

Der elektromagnetische Schwingmotor enthält einen auf einem Rahmen 1 (Fig.1) mittels Pratzen 2 befestigten vierpoligen unsymmetrischen, in bezug auf die Symmetrieachse A - A spiegelbildlichen Ständer mit ausgeprägten Polen 3, 4, 5, 6 mit einer auf diesen Polen aufgewickelten Wechselstromwicklung, die an eine Wechselstromquelle 7 angeschlossen ist. Die benachbarten, das eine Paar bildenden Ständerpole 3 und 4 sind nach entgegengesetzten Seiten in bezug auf die Symmetrieachsen von Ankerpolen 8 und 9 jeweils um den Abstand $\frac{b}{2}$ versetzt, der der halben Breite b der Ständerpole 3, 4 gleich ist. Die das andere Paar bildenden benachbarten Ständerpole 5, 6 sind aufeinander zu in bezug auf die Symmetrieachsen von Ankerpolen 10 und 11 auch jeweils um den Abstand $\frac{b}{2}$ versetzt.

Die Wechselstromwicklung besteht aus zwei parallelgeschalteten Zweigen. Der eine Zweig enthält zwei in Reihe geschaltete Spulen 12 und 13, die auf den Polen 3 und 4 aufgewickelt sind, deren Abstand im Vergleich zur Mittelgröße des Abstandes $\mathcal{C}$ zwischen den Polen vergrößert ist, die $\frac{2\pi R}{4}$ beträgt, worin R Radius der Ständerbohrung ist. Der andere Zweig enthält zwei in Reihe geschaltete Spulen 14 und 15, die auf den Ständerpolen 5 und 6 aufgewickelt sind, deren Abstand im Vergleich zur Mittelgröße des Abstandes $\mathcal{C}$ zwischen den Polen verringert ist.

Innerhalb des Ständers ist auf einer beweglichen Welle 16 mittels eines Längskeiles 17 ein vierpoliger symmetrischer Anker mit einer Gleichstromwicklung befestigt. Die Spulen 18 und 19, 20 und 21 der Gleichstromwicklung sind von der Speisequelle 22 aus betrachtet paarweise gleichsinnig in Reihe geschaltet und auf den benachbarten Polen 9, 10 bzw. 8, 11 angeordnet, während diese Paare in bezug aufeinander gegensinnig geschaltet sind. Der Ständer und der Anker sind mittels (nicht gezeichneter) Wälzlager sowie mittels elastischer Elemente 23 miteinander verbunden, die mit einem an der Welle 16 starr befestigten Hebel 24 verbunden sind. Je nach der erforderlichen Schwingungsamplitude kann das Arbeitsorgan sowohl an der Welle 16 des Schwingmotors als auch am Hebel 24 befestigt sein.

In Fig. 1 sind folgende Bezeichnungen mitaufgenommen worden:

$\Phi$ in Magnetkreisen B und C vorliegender magnetischer Gesamtfluß; N und S Polaritäten der Ständerpole 3, 4, 5, 6 und der Ankerpole 8, 9, 10, 11.

Fig. 2 zeigt den zeitlichen Verlauf der Magnetflüsse $\Phi, \Phi_\sim, \Phi_-$ im Luftspalt des Schwingmotors, wobei $\Phi_\sim$ durch die Ständerwicklung erzeugter Magnetfluß, $\Phi$ gesamter Magnetfluß, t Zeit, $\omega$ bedingte Geschwindigkeit der Magnetfelddrehung ist.

Der erfindungsgemäße elektromagnetische Schwingmotor funktioniert folgenderweise.

Fig. 2 a zeigt den Fall, wenn in der Halbperiode von 0 bis $\pi$ des Wechselstromes der Ständerwicklung sich der magnetische Wechselfluß $\Phi_\sim$ im Magnetkreis B (Fig. 1) und der durch die die Gleichstromwicklung des Ankers erzeugte magnetische Gleichfluß $\Phi_-$ (Fig. 2 a) summieren, wobei der magnetische Gesamtfluß $\Phi$ (Fig. 2a) bedingt positiv ist. Bei dem maximalen Gesamtfluß $\Phi$ im Magnetkreis B (Fig. 1) ist im Kreis C der Fluß $\Phi$ (Fig. 2 b) praktisch gleich Null. In der nächsten Halbperiode von $\pi$ bis $2\pi$ des Ständerwechselstroms erfolgt ein umgekehrter Vorgang: der Gesamtfluß $\Phi$ im Kreis C (Fig. 1) ist maximal und im Kreis B praktisch gleich Null. Dies führt zur Entstehung eines alternierenden Störmomentes, wodurch dem harmonischen Gesetz unterliegende Winkelschwingungen des Ankers erzeugt werden, wobei eine der Bedingungen für das Vorhandensein der störenden Zugkraft beim Betrieb des Schwingmotors die unsymmetrische Anordnung der Ständerpole 3, 4, 5, 6 in bezug auf die Symmetrieachsen der Ankerpole 8, 9, 10 und 11 mit der Versetzung um die halbe Breite $\frac{b}{2}$ des Poles 3, 4, 5, 6 ist.

Der erfindungsgemäße elektromagnetische Schwingmotor besitzt einen erhöhten Wirkungsgrad, weil die Ständerwicklung unmittelbar an die Wechselstromquelle 7 angeschlossen ist und an der Erzeugung der elektromagnetischen Kraft alle Ständerpole 3, 4, 5, 6 und alle Ankerpole 8, 9, 10 und 11 stets beteiligt sind. Die vorhandene Gleichstromwicklung zur Vormagnetisierung des Ankers gestattet, die Blindleistung zu kompensieren und dadurch den Leistungsfaktor (cos $\varphi$ ) zu erhöhen.

Die Regelung des Ankervormagnetisierungsstroms erlaubt es, die Amplitude der Winkelschwingungen zu ändern. Die Spulen 18 und 19, 20, 21 der Ankerwicklung sind von der Speisequelle 22 aus betrachtet paarweise gleichsinnig in Reihe und die Paare in bezug aufeinander gegensinnig geschaltet, wodurch die an den Wicklungsklemmen des Ankers induzierte EMK gleich Null ist.

Der Preis des Schwingungserregers wird durch die eingesparten Halbleitergleichrichter verringert und die Parameter der Zuverlässigkeit werden verbessert.

Gewerbliche Verwertbarkeit

Die Erfindung ist bei Vorrichtungen anwendbar, deren Arbeitsorgan hin- und hergehende Drehbewegung vollführt und die in verschiedenen Zweigen der Volkswirtschaft weit verwendet werden, z.B. zum Vibrationsschleifen im Maschinenbau, zum Schwingsortieren, Schwingfördern in der Landwirtschaft, für Systeme zum künstlichen Blutkreislauf in der Medizin.

- 6 -

## PATENTANSPRUCH

Elektromagnetischer Schwingmotor, der einen vierpoligen symmetrischen Anker mit einer Gleichstromwicklung und einen vierpoligen unsymmetrischen Ständer mit einer Wechselstromwicklung enthält, die aus zwei parallelgeschalteten Zweigen besteht, von denen jeder zwei in Reihe geschaltete Spulen (12, 13 und 14, 15) beinhaltet, dadurch g e k e n n - z e i c h n e t, daß die das eine Paar bildenden benachbarten Ständerpole (3, 4) nach entgegengesetzten Seiten versetzt sind und die das andere Paar bildenden benachbarten Pole (5, 6) aufeinander zu in bezug auf die Symmetrieachsen der ihnen zugeordneten Ankerpole (8, 9 und 10, 11) um einen der halben Breite (b) der Ständerpole gleichen Abstand ($\frac{b}{2}$) versetzt sind, wobei jeder Zweig der Wechselstromwicklung auf dem ihm zugeordneten Paar der benachbarten Ständerpole (3, 4 und 5, 6) angebracht ist, und außerdem die Gleichstromwicklungsspulen (18, 19 und 20, 21) des Ankers paarweise gleichsinnig in Reihe geschaltet und auf seinen benachbarten Polen (9, 10 und 8, 10) angebracht sind, während diese Paare der Spulen (18, 19 und 20, 21) in bezug aufeinander gegensinnig geschaltet sind.

FIG. 1

FIG. 2a

FIG. 2b

# INTERNATIONAL SEARCH REPORT

International Application No PCT/SU 86/00088

| I. CLASSIFICATION OF SUBJECT MATTER (if several classification symbols apply, indicate all) [6] |
|---|
| According to International Patent Classification (IPC) or to both National Classification and IPC |
| IPC[4]    H 02 K 33/08 |

## II. FIELDS SEARCHED

| Minimum Documentation Searched [7] | |
|---|---|
| Classification System | Classification Symbols |
| IPC[4] | H 02 K 33/00÷33/18, B 06 B 1/00÷1/04, H 01 F 7/06÷7/14, B 65 G 27/02÷27/04 |

| Documentation Searched other than Minimum Documentation to the Extent that such Documents are Included in the Fields Searched [8] |
|---|
| |

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| A | SU, A1, 194630, (Institut gornogo dela im. A.A. Skochinskogo), 14 June 1967 (14.06.67),see the claims and the drawing | 1 |
| A | SU, A1, 1040573, (Gruzinsky ordena Trudovogo Krasnogo Znameni selskokhozyaitvenny institut), 23 May 1986 (23.05.86),see the drawing and the claims | 1 |
| A | US, A, 3538358, (Kuno Moser GmbH), 03 November 1970 (03.11.70), see figures 1,2 claim 1 | 1 |
| A | US, A, 3959673, (General Scanning, Inc.), 25 May 1976 (25.05.76), see figures 1,2 column 3, lines 35-68, column 4, lines 1-6 | 1 |
| A | FR, A, 1552754, (Serge HELD), 10 January 1969 (10.01.69), see figure 10a, page 8 column 2, paragraphs 6,7 | 1 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 26 May 1987 (26.05.87) | 15 June 1987 (15.06.87) |
| International Searching Authority | Signature of Authorized Officer |
| EUROPEAN PATENT OFFICE | |

Form PCT/ISA/210 (second sheet) (January 1985)